# EUROPÄISCHE PATENTSCHRIFT

(11) **EP 2 267 060 B1**
(45) Veröffentlichungstag und Bekanntmachung des Hinweises auf die Patenterteilung: **17.09.2014**
(21) Anmeldenummer: 10005797.5
(22) Anmeldetag: 02.12.2003
(51) Int. Cl.: C08G 73/06, C08G 73/18, C08G 73/22, C08G 73/08, H01M 8/00, C08G 73/00

(54) **Hochmolekulare Polyazole**
High-molecular polyazoles
Polyazoles hautement moléculaires

(30) Priorität: 16.12.2002 DE 10258580
(43) Veröffentlichungstag der Anmeldung: 29.12.2010
(62) Teilanmeldung aus: 03782267.3
(73) Patentinhaber: PBI Performance Products, Inc., Charlotte, NC 28273 (US)
(72) Erfinder: Calundann, Gordon, Dr., North Plainfield, NJ 07060 (US); Uensal, Oemer, Dr., 55128 Mainz (DE); Benicewicz, Brian, Prof., Loudonville, SA 12211 (US); Dawkins, Bobby G., Charlotte, NC 28277 (US); Baker, Dean, Rock Hill, SC 29730 (US); Joiner, Rita, Rock Hill, SC 29732 (US)
(74) Vertreter: Mai, Dörr, Besier

(56) Entgegenhaltungen:
- EP-A1- 0 476 560
- DE-A1- 10 052 237
- GB-A- 1 422 177
- US-A- 4 154 919
- US-A- 4 535 144

## Beschreibung

Die vorliegende Erfindung betrifft ein Verfahren zur Herstellung von hochmolekulare Polyazole und deren Verwendung.

Polyazole wie beispielsweise Polybenzimidazole (®Celazole) sind seit langem bekannt. Die Herstellung derartiger Polybenzimidazole (PBI) erfolgt üblicherweise durch Umsetzung von 3,3',4,4'-Tetraaminobiphenyl mit Isophthalsäure oder Diphenylisophthalat bzw. deren Estern in der Schmelze. Bei der Reaktion mit DPIP entsteht als Nebenprodukt gasförmiges Phenol, das zu einer starken Schaumbildung und Volumenexpansion führt. Das enstehende Präpolymer erstarrt im Reaktor und wird anschließend mechanisch zerkleinert. Anschließend wird das pulverförmige Präpolymer in einer Festphasen-Polymerisation bei Temperaturen von bis zu 400°C endpolymerisiert und das gewünschte Polybenzimidazole erhalten.

Aus GB-A-1422177 ist ein Verfahren zur Herstellung von hochmolekularen Polyoxadiazolen in hochkonzentrierter Schwefelsäure bekannt, bei welchem die erhaltene Mischung aus Schwefelsäure und hochmolekularen Polyoxadiazol zur Herstellung von Formkörper genutzt wird.

Aus EP-A-0476560 sind Polybenzazole mit Perfluorierten cyclo-butan Ringen bekannt. Die Herstellung der Polymere erfolgt in Polyphosphorsäure.

DE-A-10052237 beschreibt die Herstellung von Polybenzimidazolen durch Polykondensation in der Schmelze und die Herstellung von lagerstabilen Lösungen in organischen Lösemitteln.

Das U.S. Patent Nr. 4,154,919 beschreibt die Herstellung von hochmolekularen Polybenzimidazolen durch Polykondensation in der Schmelze.

Das U.S. Patent Nr. 4,535,144 beschreibt die Herstellung von Polybenzimidazolen mittels einer Polykondensation in der Schmelze, die zwei stufig durchgeführt wird.

Zur Herstellung von Polymerfolien bzw. Polymerfasern wird das PBI in einem weiteren Schritt in polaren, aprotischen Lösemitteln wie beispielsweise Dimethylacetamid (DMAc) gelöst und eine Folie bzw. eine Faser mittels klassischer Verfahren erzeugt.

Bei der Herstellung der Lösungen hat sich gezeigt, daß diese stark von den Eigenschaften des eingesetzten Polyazols abhängen. Insbesondere die beobachtete Gelbildungen und andere Kristallisationseffekte führen zu einer geringen Lagerfähigkeit der Lösungen. Diese Probleme sind bereits in der Deutschen Patentanmeldung Nr. 10052237.8 beschrieben. Die dort beschriebene Prozedur ist jedoch sehr aufwendig und führt zu einer schlechten Ausbeute an eingesetztem Polyazolpolymeren.

Aufgabe der vorliegenden Erfindung ist es ein Polyazol bereitzustellen, das die vorstehenden Probleme überwindet und andererseits die hervorragenden physikalischen Eigenschaften ausweist.

Es wurde nunmehr gefunden, daß hochmolekulare Polyazole einerseits zur Bildung von lagerstabilen Lösungen führen und andererseits die hervorragenden physikalischen Eigenschaften bislang bekannter Polyazole noch übertreffen. Die hochmolekularen Polyazole werden zudem in einfacher Weise bereitgestellt.

Gegenstand der vorliegenden Erfindung ist ein Verfahren gemäß Anspruch 1.

Bei den erfindungsgemäß eingesetzten aromatischen und heteroaromatischen Tetra-Amino-Verbindungen handelt es sich vorzugsweise um 3,3',4,4'-Tetraaminobiphenyl, 2,3,5,6-Tetraaminopyridin, 1,2,4,5-Tetraaminobenzol, 3,3',4,4'- Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan sowie deren Salze, insbesondere deren Mono-, Di-, Tri- und Tetrahydrochloridderivate.

Bei den erfindungsgemäß eingesetzten aromatischen Carbonsäuren handelt es sich um Di-carbonsäuren bzw. deren Estern oder deren Anhydride oder deren Säurechloride. Der Begriff aromatische Carbonsäuren umfasst gleichermaßen auch heteroaromatische Carbonsäuren. Vorzugsweise handelt es sich bei den aromatischen Dicarbonsäuren um Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride.

Bei den erfindungsgemäß eingesetzten heteroaromatischen Carbonsäuren handelt es sich um heteroaromatischen Di-carbonsäuren bzw. deren Estern oder deren Anhydride. Als Heteroaromatische Carbonsäuren werden aromatische Systeme verstanden welche mindestens ein Stickstoff, Sauerstoff, Schwefel oder Phosphoratom im Aromaten enthalten. Vorzugsweise handelt es sich um Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure, 2,5-Pyrazindicarbonsäure, 2,4,6-Pyridintricarbonsäure, Benzimidazol-5,6-dicarbonsäure. Sowie deren C1-C20-Alkyl-Ester oder C5-C12-Aryl-Ester, oder deren Säureanhydride oder deren Säurechloride.

Bei den erfindungsgemäß eingesetzten aromatischen und heteroaromatischen Diaminocarbonsäuren handelt es sich bevorzugt um Diaminobenzoesäure und deren Mono und Dihydrochloridderivate.

Bevorzugt werden in Schritt A) Mischungen von mindestens 2 verschiedenen aromatischen Carbonsäuren einzusetzen. Besonders bevorzugt werden Mischungen eingesetzt, die neben aromatischen Carbonsäuren auch heteroaromatische Carbonsäuren enthalten. Das Mischungsverhältnis von aromatischen Carbonsäuren zu heteroaromatischen Carbonsäuren beträgt zwischen 1:99 und 99:1, vorzugsweise 1:50 bis 50:1.
Bei diesem Mischungen handelt es sich insbesondere um Mischungen von N-heteroaromatischen Di-carbonsäuren und aromatischen Dicarbonsäuren bzw. deren Ester. Nicht limitierende Beispiele dafür sind Isophthalsäure, Terephthalsäure, Phthalsäure, 2,5-Dihydroxyterephthalsäure, 2,6-Dihydroxyisophthalsäure, 4,6-Dihydroxyisophthalsäure, 2,3-Dihydroxyphthalsäure, 2,4-Dihydroxyphthalsäure. 3,4-Dihydroxyphthalsäure,1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsulfon-4,4'-dicarbonsäure, Biphenyl-4,4'-dicarbonsäure, 4-Trifluoromethylphthalsäure, Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure. Bevorzugt handelt es sich um Di-Phenyl-isophthalat (DPIP) und deren Ester.

Das gebildete Polymer auf Basis von Polyazol enthält wiederkehrende Azoleinheiten der allgemeinen Formel (I) und/oder (II) und/oder (III) und/oder (IV) und/oder (V) und/oder (VI) und/oder (VII) und/oder (VIII) und/oder (IX) und/oder (X) 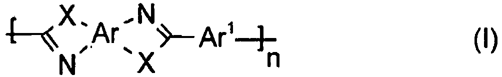 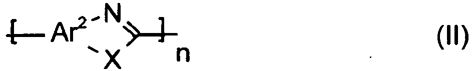 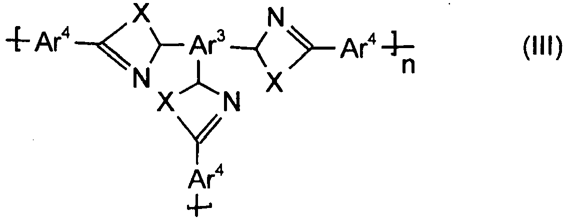 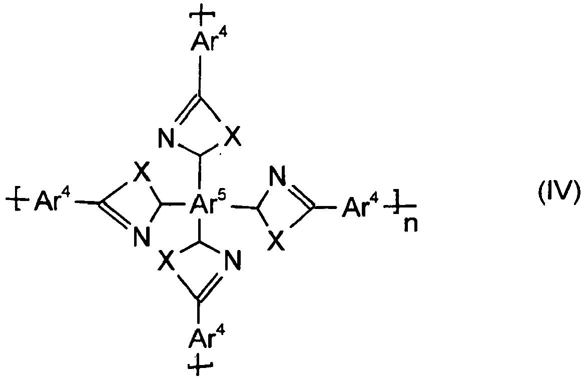 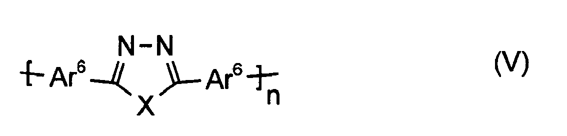 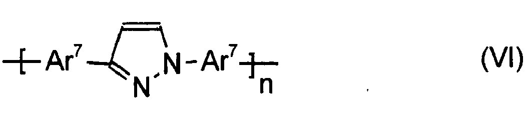 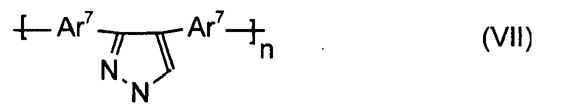 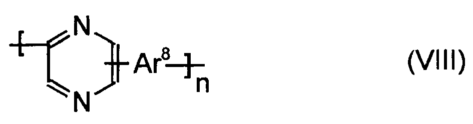 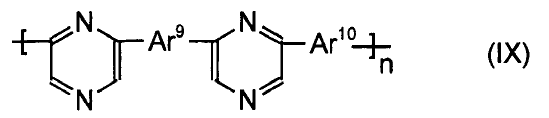 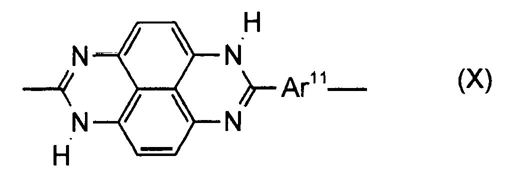 worin
- Ar: gleich oder verschieden sind und für eine vierbindige aromatische oder heteroaromatische Gruppe, die ein- oder mehrkernig sein kann,
- Ar¹: gleich oder verschieden sind und für eine zweibindige aromatische oder heteroaromatische Gruppe, die ein- oder mehrkernig sein kann,
- Ar²: gleich oder verschieden sind und für eine zwei oder dreibindige aromatische oder heteroaromatische Gruppe, die ein- oder mehrkernig sein kann,
- Ar³: gleich oder verschieden sind und für eine dreibindige aromatische oder heteroaromatische Gruppe, die ein- oder mehrkernig sein kann,
- Ar⁴: gleich oder verschieden sind und für eine dreibindige aromatische oder heteroaromatische Gruppe, die ein- oder mehrkernig sein kann,
- Ar⁵: gleich oder verschieden sind und für eine vierbindige aromatische oder heteroaromatische Gruppe, die ein- oder mehrkernig sein kann,
- Ar⁶: gleich oder verschieden sind und für eine zweibindige aromatische oder heteroaromatische Gruppe, die ein- oder mehrkernig sein kann,
- Ar⁷: gleich oder verschieden sind und für eine zweibindige aromatische oder heteroaromatische Gruppe, die ein- oder mehrkernig sein kann,
- Ar⁸: gleich oder verschieden sind und für eine dreibindige aromatische oder heteroaromatische Gruppe, die ein- oder mehrkernig sein kann,
- Ar⁹: gleich oder verschieden sind und für eine zwei- oder drei- oder vierbindige aromatische oder heteroaromatische Gruppe, die ein- oder mehrkernig sein kann,
- Ar¹⁰: gleich oder verschieden sind und für eine zwei- oder dreibindige aromatische oder heteroaromatische Gruppe, die ein- oder mehrkernig sein kann,
- Ar¹¹: gleich oder verschieden sind und für eine zweibindige aromatische oder heteroaromatische Gruppe, die ein- oder mehrkernig sein kann,
- X: gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt
- n: eine ganze Zahl größer gleich 10, bevorzugt größer gleich 100 ist.

Bevorzugte aromatische oder heteroaromatische Gruppen leiten sich von Benzol, Naphthalin, Biphenyl, Diphenylether, Diphenylmethan, Diphenyldimethylmethan, Bisphenon, Diphenylsulfon, Chinolin, Pyridin, Bipyridin, Pyridazin, Pyrimidin, Pyrazin, Triazin, Tetrazin, Pyrol, Pyrazol, Anthracen, Benzopyrrol, Benzotriazol, Benzooxathiadiazol, Benzooxadiazol, Benzopyridin, Benzopyrazin, Benzopyrazidin, Benzopyrimidin, Benzopyrazin, Benzotriazin, Indolizin, Chinolizin, Pyridopyridin, Imidazopyrimidin, Pyrazinopyrimidin, Carbazol, Aciridin, Phenazin, Benzochinolin, Phenoxazin, Phenothiazin, Acridizin, Benzopteridin, Phenanthrolin und Phenanthren, die gegebenenfalls auch substituiert sein können, ab.

Dabei ist das Substitionsmuster von Ar¹, Ar⁴, Ar⁶, Ar⁷, Ar⁸, Ar⁹, Ar¹⁰, Ar¹¹ beliebig, im Falle vom Phenylen beispielsweise kann Ar¹, Ar⁴, Ar⁶, Ar⁷, Ar⁸, Ar⁹, Ar¹⁰, Ar¹¹ ortho-, meta- und para-Phenylen sein. Besonders bevorzugte Gruppen leiten sich von Benzol und Biphenylen, die gegebenenfalls auch substituiert sein können, ab.

Bevorzugte Alkylgruppen sind kurzkettige Alkylgruppen mit 1 bis 4 Kohlenstoffatomen, wie z. B. Methyl-, Ethyl-, n- oder i-Propyl- und t-Butyl-Gruppen.

Bevorzugte aromatische Gruppen sind Phenyl- oder Naphthyl-Gruppen. Die Alkylgruppen und die aromatischen Gruppen können substituiert sein.

Bevorzugte Substituenten sind Halogenatome wie z. B. Fluor, Aminogruppen, Hydroxygruppen oder kurzkettige Alkylgruppen wie z. B. Methyl- oder Ethylgruppen.

Bevorzugt sind Polyazole mit wiederkehrenden Einheiten der Formel (I) bei denen die Reste X innerhalb einer wiederkehrenden Einheit gleich sind.

Die Polyazole können grundsätzlich auch unterschiedliche wiederkehrende Einheiten aufweisen, die sich beispielsweise in ihrem Rest X unterscheiden. Vorzugsweise jedoch weist es nur gleiche Reste X in einer wiederkehrenden Einheit auf.

Weitere bevorzugte Polyazol-Polymere sind Polyimidazole, Polybenzthiazole, Polybenzoxazole, Polyoxadiazole, Polyquinoxalines, Polythiadiazole Poly(pyridine), Poly(pyrimidine), und Poly(tetrazapyrene).

In einer weiteren Ausführungsform der vorliegenden Erfindung ist das Polymer enthaltend wiederkehrende Azoleinheiten ein Copolymer oder ein Blend, das mindestens zwei Einheiten der Formel (I) bis (X) enthält, die sich voneinander unterscheiden. Die Polymere können als Blockcopolymere (Diblock, Triblock), statistische Copolymere, periodische Copolymere und/oder alternierende Polymere vorliegen.

In einer besonders bevorzugten Ausführungsform der vorliegenden Erfindung ist das Polymer enthaltend wiederkehrende Azoleinheiten ein Polyazol, das nur Einheiten der Formel (I) und/oder (II) enthält.

Die Anzahl der wiederkehrende Azoleinheiten im Polymer ist vorzugsweise eine ganze Zahl größer gleich 10. Besonders bevorzugte Polymere enthalten mindestens 100 wiederkehrende Azoleinheiten.

Im Rahmen der vorliegenden Erfindung sind Polymere enthaltend wiederkehrenden Benzimidazoleinheiten bevorzugt. Einige Beispiele der äußerst zweckmäßigen Polymere enthaltend wiederkehrende Benzimidazoleinheiten werden durch die nachfolgende Formeln wiedergegeben: 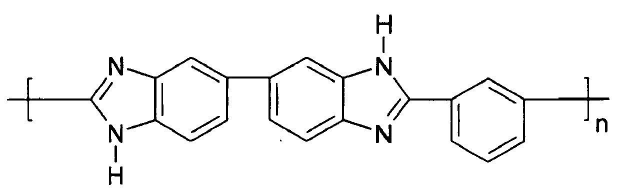 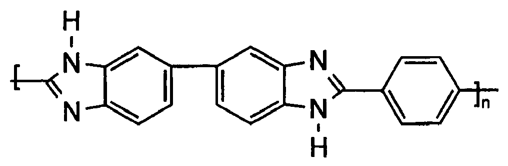 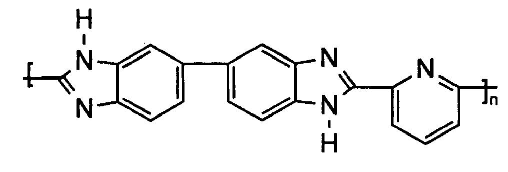 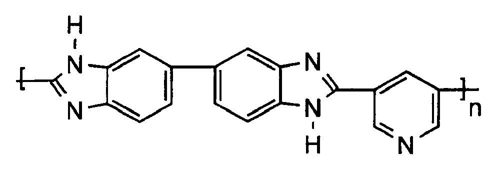 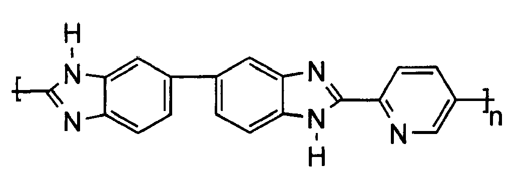 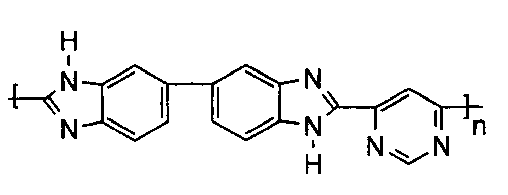 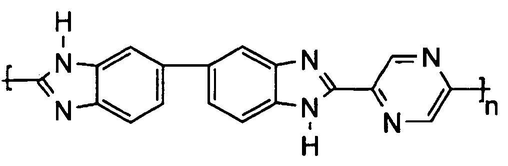 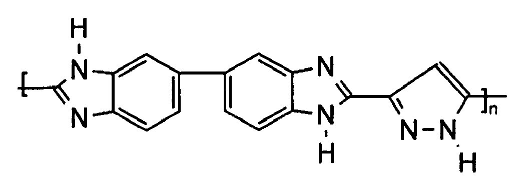 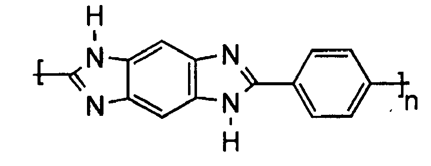 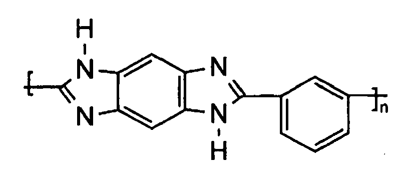 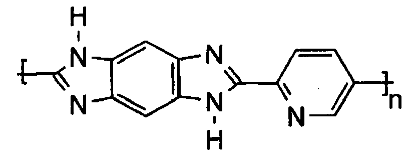 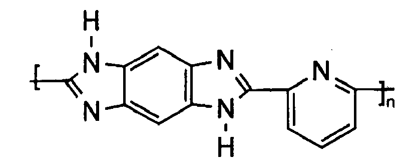 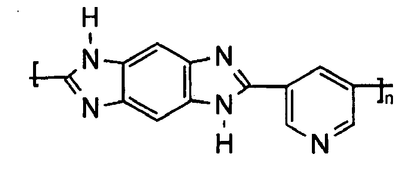 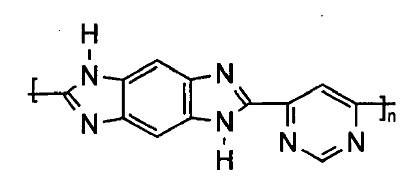 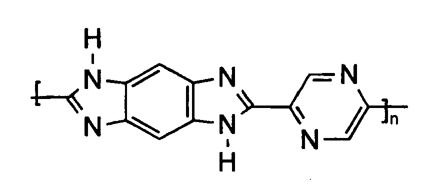 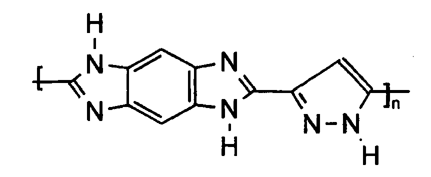 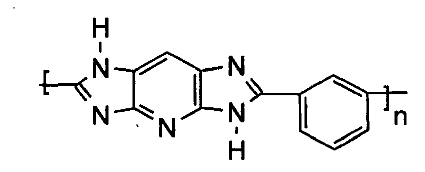 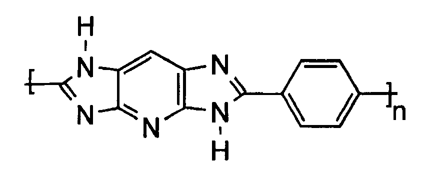 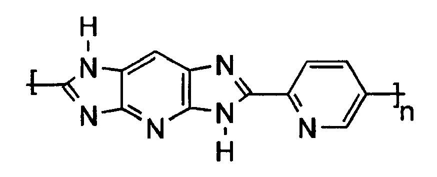 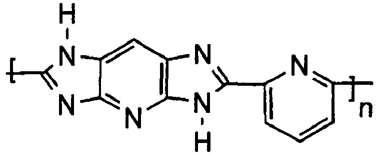 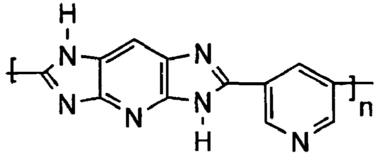 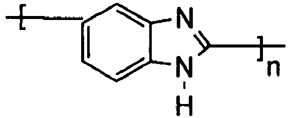 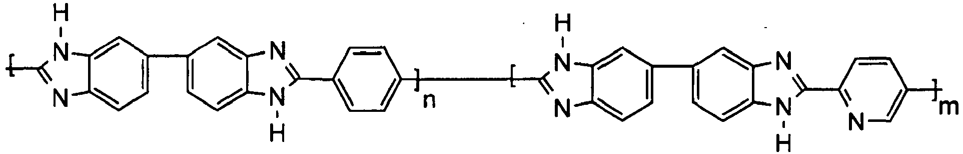 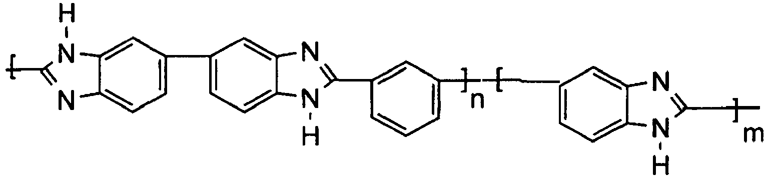 wobei n und m eine ganze Zahl größer gleich 10, vorzugsweise größer gleich 100 ist.

Die erfindungsgemäß hergestellten Polyazole, insbesondere jedoch die Polybenzimidazole zeichnen sich durch ein hohes Molekulargewicht aus. Gemessen als Intrinsische Viskosität beträgt diese mindestens 1,3 dl/g, insbesondere mindestens 1,4 dl/g, und liegt somit deutlich über dem von handelsüblichem Polybenzimidazol (IV < 1,1 dl/g).

Die Erwärmung gemäß Schritt B) erfolgt unter Inertgas und vorzugsweise unter Ausschluß von Feuchtigkeit. Die Erwärmung erfolgt für eine Dauer von 30 Minuten bis zu 24 Stunden, vorzugsweise zwischen 1 Stunde und 15 Stunden, insbesondere zwischen 2 Stunden und 10 Stunden. Zur besseren Verteilung der einzubringenden Wärme ist es von Vorteil für eine innige Durchmischung der zu erwärmenden Masse zu sorgen. Vorzugsweise wird die Masse in Schritt B) gerührt. Dieses hat einen weiteren Vorteil, da die im Temperaturbereich von 170 bis 270°C zu beobachtende Schaumbildung kontrolliert bzw. reduziert werden kann. Es ist von Vorteil, einen Rührer zu wählen der geeignet ist, die Zerkleinerung der gemäß Schritt B) erhaltenen schaumartigen Masse, in Schritt C), zu bewerkstelligen. Die erhaltenen Partikel können, sofern die Zerkleinerung mit dem vorhandenen Rührer noch unzureichend war, weiter zerkleinert werden.

Zur Ermittlung der Teilchengröße und der Teilchengrößen-Verteilung existieren eine Reihe von Meßmethoden. Im Rahmen dieser Erfindung genügt zur Teilchengrößen-Bestimmung die Siebanalyse, so daß in Schritt C) eine Fraktionierung durch Siebung erfolgt.
Grundsätzlich sind jedoch auch alle anderen Fraktionierungsmethoden geeignet, die zu einer entsprechenden Aufteilung führen.

Zur erfindungsgemäßen Fraktionierung wird in einer Siebmaschine ein Satz von Sieben verschiedener Maschenweiten übereinander angeordnet. Bei der Siebanalyse wird die Korngröße durch die Maschenweite desjenigen Siebes bestimmt, welches das Korn (Siebdurchlauf, Unterkorn) gerade noch passieren läßt. Die Siebe werden nach lichter Maschenweite in Micrometer charakterisiert.

Auf diese Art und Weise wird die Teilchenfraktion 300 µm bis 1000 µm von den restlichen Teilchen abgetrennt und anschließend in Schritt D) eingesetzt. Die in Schritt D) eingesetzten Materialien enthalten mindestens 90 Gew.% der Teilchenfraktion 300 µm bis 1000 µm, vorzugsweise mindestens 95 Gew.-%, insbesondere mindestens 98 Gew.- %.

Die Fraktionierung der Teilchen in Schritt C) erfolgt vorzugsweise unter Inertgas und unter Ausschluß von Feuchtigkeit. Sollte dies nicht möglich sein, so kann eine Trocknung der weiterzuverarbeitenden Teilchenfraktion erforderlich werden. Der Restwassergehalt der in Schritt D) verwendeten Teilchen sollte 5 Gew.%, vorzugsweise 3 Gew.-%, insbesondere 1 Gew.-%, nicht übersteigen. Die Trocknung kann mittels bekannter Verfahren erfolgen.

Anschließend wird in Schritt D) die Teilchenfraktion 300 µm bis 1000 µm unter Inertgas, vorzugsweise unter Ausschluß von Feuchtigkeit, auf Temperaturen von bis zu 450°C, vorzugsweise von bis zu 400°C, erwärmt. Die Mindesttemperatur in Schritt beträgt 300°C, vorzugsweise mehr als 350°C. Die Behandlungsdauer beträgt in Abhängigkeit von der gewählten Temperatur zwischen 15 Minuten und bis zu 24 Stunden, vorzugsweise zwischen 30 Minuten und 15 Stunden, insbesondere zwischen 1 Stunde und 10 Stunden. Zur besseren Verteilung der einzubringenden Wärme ist es von Vorteil für eine innige Durchmischung der zu erwärmenden Masse zu sorgen. Vorzugsweise wird in Schritt D) gerührt.

In einer weiteren Ausführungsform der Erfindung kann Schritt D) in einem separaten Reaktor durchgeführt werden und die gewünschte Teilfraktion als Depotsubstanz zwischengelagert werden. Vorzugsweise wird Schritt D) in einem separaten Reaktor durchgeführt.

In Schritt D) erfolgt die Kondensation zum Polyazolpolymeren und der Aufbau des hohen Molekulargewichtes.

Nach Abkühlung kann das Molekulargewicht bestimmt werden.

Die erfindungsgemäß hergestellten Polyazole, insbesondere jedoch die Polybenzimidazole zeichnen sich durch ein hohes Molekulargewicht aus. Gemessen als Intrinsische Viskosität beträgt diese mindestens 1,3 dl/g, insbesondere mindestens 1,4 dl/g, und liegt somit deutlich über dem von handelsüblichem Polybenzimidazol (IV < 1,1 dl/g).

Aufgrund des hohen Molekulargewichtes eignen sich die erfindungsgemäß hergestellten Polyazole besonders gut zur Herstellung von Formkörpern, Fasern, insbesondere hochfesten Fasern, und Folien bei denen hohe Ansprüche an die mechanische Eigenschaften gestellt werden. Ein weiterer Vorteil des erfindungsgemäßen hochmolekularen Polyazol besteht darin, das diese stabilere Lösungen bildet, die eine verbesserte Lagerfähigkeit besitzen.

Gegenstand der vorliegenden Erfindung sind somit auch Lösungen des erfindungsgemäßen hochmolekularen Polyazols in polaren, aprotischen Lösemitteln, insbesondere in Dimethylacetamid. Die allgemeine Herstellung solcher Lösungen ist beispielsweise in der Deutschen Patentanmeldung 10052237.8 beschrieben. Derartige Lösungen eignen sich zur Beschichtung von Oberflächen, insbesondere von Metalloberflächen.

Weiterer Gegenstand der vorliegenden Erfindung sind Formkörper die durch Sinterung oder Tempern des erfindungsgemäßen hochmolekularen Polyazols, vorzugsweise durch Sinterung oder Tempern in Formen, erhalten werden.

Hierbei hat es sich als vorteilhaft erwiesen, wenn das erfindungsgemäß hergestellte hochmolekulare Polyazol eine Vernetzung aufweist. Insofern das Material in diesem Gebiet Verwendung findet, wird in Schritt A) auch Tricarbonsäuren bzw. Tetracarbonsäre zugesetzt. Hierdurch wird die gewünschte Verzweigung/ Vernetzung im Polymeren erzielt.

Bei den in Schritt A) zugesetzten Tri-carbonsäuren und Tetra-Carbonsäuren bzw. deren Estern oder deren Anhydride oder deren Säurechloride, handelt es sich vorzugweise deren C1-C20-Alkyl-Ester oder C5-C12-Aryl-Ester. Besonders bevorzugt handelt es sich um 1,3,5-Benzol-tricarbonsäure (Trimesic acid), 1,2,4-Benzol-tricarbonsäure (Trimellitic acid), (2-Carboxyphenyl)iminodiessigsäure, 3,5,3'-Biphenyltricarbonsäure, 3,5,4'-Biphenyltricarbonsäure, 3,5,3',5'-biphenyltetracarboxylic acid, 1,2,4,5-Benzoltetracarbonsäure, Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure.

Der Gehalt an Tri-carbonsäure bzw. Tetracarbonsäuren (bezogen auf eingesetzte Dicarbonsäure) beträgt zwischen 0 und 30 Mol-%, vorzugsweise 0,1 und 20 Mol %, insbesondere 0,5 und 10 Mol-%.

Die aus dem erfindungsgemäß hochmolekularen Polyazollösungen hergestellten Filme weisen verbesserte Materialeigenschaften gegenüber den bisher bekannten Polymerfolien auf und eignen sich als Separationsmembranen

Solche Separationsmembranen können als dichte Polymerfilme, poröse Hohlfasermembranen oder als poröse, offenzellige Polymerfilme gegebenfalls mit kompakter Deckschicht hergestellt werden.

Zur Herstellung einer porösen Membran kann eine erfindungsgemäße Polymerlösung zusätzlich einen sogenannten Porenbildner, wie zum Beispiel Glycerin, enthalten die, je nach Wahl der Zusammensetzung des Fällmittels, zu unterschiedlichen Morphologien der Separationsmembranen führen.

Für Separationsanwendungen werden folgende Strukturen bevorzugt: i) symmetrische, poröse Struktur; ii) Asymmetrische poröse Struktur mit einer Polymerverdichtung nahe einer Membranoberfläche. Rasterelektronenmikroskopische Aufnahmen solcher besonders geeigneter Strukturen von Polybenzimidazolmembran sind in Journal of Membrane Science Band 20 ,1984, Seiten 147-66 offenbart.

Solche Phaseninversionsmembranen und Strukturen sind dem Fachmann bekannt. Membranen mit symmetrischer poröser Struktur werden angewendet als Separations- bzw. Filtrationsmembranen für Luft und Gasfiltration oder der Mikro- oder Ultrafiltration für Flüssigkeiten. Membranen mit asymmetrischer, poröser Struktur können vielseitig zur Umkehrosmose insbesondere Wasserentsalzung, Dialyse oder Gasaufbereitung benutzt werden.

Eine besonders zweckmässige Anwendung ist die Separation von Wasserstoff und Kohlendioxid aus Gasgemischen in Kombination mit einem porösen metallischen Träger. Alternative Technologien zur CO₂-Trennung benötigen wegen der geringen thermischen Stabilität der Polymermembran eine Abkühlung des Gases auf 150°C wodurch der Wirkungsgrad verringert wird. Die erfindungsgemässen Separationsmembranen auf Basis von Polyazolen können bis zu einer Temperatur von 400°C dauerhaft betrieben werden und führen so zu einer Erhöhung der Ausbeute und einer Verringerung der Kosten.

Für weitere Informationen über Separationsmembranen auf Basis von Polyazolen wird auf die Fachliteratur, insbesondere auf die Patente WO 98/14505; US-A-4693815; US-A-4693824; US-A-375262; US-A-3737042; US-A-4512894; US-A-448687; US-A-3841492 verwiesen. Die in den vorstehend genannten Literaturstellen enthaltene Offenbarung hinsichtlich des Aufbaues und der Herstellung von Separationsmembranen wird durch die vorliegende Erfindung mit umfaßt und ist Bestandteil der vorliegenden Beschreibung. Insbesondere können solche Separationsmembranen in Form von flachen Filmen oder als Hohlfasermembranen hergestellt werden.

Zur weiteren Verbesserung der anwendungstechnischen Eigenschaften können der Polymerfolie zusätzlich noch Füllstoffe, insbesondere nano-skalige Füllstoffe, zugesetzt werden.

Nicht limitierende Beispiele für derartige Füllstoffe sind
- Oxide wie: Al₂O₃, Sb₂O₅, ThO₂, SnO₂, ZrO₂, MoO₃
- Silikate wie: Zeolithe, Zeolithe(NH₄+), Schichtsilikate, Gerüstsilikate, H-Natrolite, H-Mordenite, NH₄-Analcine, NH₄-Sodalite, NH₄-Gallate, H-Montmorillonite
- Füllstoffe wie: Carbide, insbesondere SiC, Si₃N₄. Fasern, insbesondere Glasfasern, Glaspulvern und/oder Polymerfasern, bevorzugt auf Basis von Polyazolen.

Als weiteres kann die Polymerfolie auch Additive enthalten, die die im Betrieb bei der Gasfiltration möglicherweise erzeugten Radikale abfangen oder zerstören.
Nicht limitierende Beispiele für solche Additive sind:
Bis(trifluormethyl)nitroxid, 2,2-Diphenyl-1-pikrinylhydrazyl, Phenole, Alkylphenole, sterisch gehinderte Alkylphenole wie zum Beispiel Irganox, aromatische Amine, sterisch gehinderte Amine wie zum Beispiel Chimassorb; sterisch gehinderte Hydroxylamine, sterisch gehinderte Alkylamine, sterisch gehinderte Hydroxylamine, sterisch gehinderte Hydroxylaminether, Phosphite wie zum Beispiel Irgafos, Nitrosobenzol, Methyl.2-nitroso-propan, Benzophenon, Benzaldehyd-tert.-butylnitron, Cysteamin, Melanine, Bleioxide, Manganoxide, Nickeloxide, Cobaltoxide.

Zu möglichen Einsatzgebieten der erfindungsgemäßen Polymerfolien gehört unter anderem die Verwendung als Filtermedium in der Gasfiltration und -trennung bzw. Gasaufreinigung, sowie in der Umkehr-Osmose, als Substrate für flexible elektrische Schaltungen, als Batterieseparatoren, als Schutzfolie für elektrische Kabel, als Isolator in elektrischen Bauteilen und Vorrichtungen wie Kondensatoren, als Schutzfolie für Metall- und sonstige Oberflächen.

Die aus dem erfindungsgemäß hergestellten hochmolekularen Polyazollösungen hergestellten Fasern weisen verbesserte Materialeigenschaften, wie Festigkeit und E-Modul, gegenüber den bisher bekannten Polymerfasern auf und eignen sich insbesondere zur Herstellung hochfester Fasern. Insofern die Fasern für textile Zwecke eingesetzt werden sollen, werden diese noch mit verdünnter Schwefelsäure bei einer Temperatur oberhalb von 400°C, vorzugsweise oberhalb von 450°C, behandelt. Die hochfesten Fasern finden Verwendung als Verstärkungsfasern in sogenannten Composite-Materialien, Verbund-Werkstoffen und faserverstärkten Formteilen, insbesondere auch Polymerbasis.

Ein weiterer Gegenstand der vorliegenden Erfindung sind somit Polymerfasern auf Basis von erfindungsgemäß hergestellten Polyazolen.

Die Herstellung dieser Fasern erfolgt mittels bekannter Methoden. Im Rahmen der vorliegenden Erfindung wird eine Lösung des erfindungsgemäßen hochmolekularen Polyazols in polaren, aprotischen Lösemitteln, insbesondere in Dimethylacetamid, mittel der für PBI bekannten Methoden extrudiert und anschließend das Lösemittel mit bekannten Methoden entfernt.

Die gebildeten Fasern können Endlos-Filamente sein oder - falls die Faserbildung analog der "Melt blow - Methode" erfolgt - Stapelfaser-Charakter aufweisen. Die Titer der gebildeten Fasern unterliegen keiner Einschränkung, so daß auch Monofile, d.h. Drahtähnliche Fasern herstellbar sind. Neben diesen sind auch Hohlfasern herstellbar. Der gewünschte Titer ergibt sich aus der beabsichtigten Verwendung der Faser. Das gesamte Handling der gebildeten Faser kann mittels bekannter Faser-Technologien (vgl. Complete Textile Glossary, Celanese Acetate LLC, 2000) erfolgen.

In einer Variante können die frisch gebildeten, noch lösemittelhaltigen Fasern, in ein Fällungsbad eingebracht werden. Dieses Einbringen erfolgt im Temperaturbereich zwischen Raumtemperatur (20°C) und der Siedetemperatur der Fällungs-Flüssigkeit (bei Normaldruck).

Als Fällungs-Flüssigkeit im Sinne der Erfindung werden bei Raumtemperatur [d.h. 20°C] flüssig vorliegende Lösungsmittel ausgewählt aus der Gruppe der Alkohole, Ketone, Alkane (aliphatische und cycloaliphatische), Ether (aliphatische und cycloaliphatische), Ester, Carbonsäuren, wobei die vorstehenden Gruppenmitglieder halogeniert sein können, Wasser, anorganischen Säuren (wie z.B. H3PO4, H2SO4) und Gemische derselben eingesetzt.

Vorzugsweise werden C1-C10 Alkohole, C2-C5 Ketone, C1-C10-Alkane (aliphatische und cycloaliphatische), C2-C6-Ether (aliphatische und cycloaliphatische), C2-C5 Ester, C1-C3 Carbonsäuren, Dichlormethan, Wasser und Gemische derselben eingesetzt.

Nachfolgend wird die Faser von dem Fällungs-Flüssigkeit befreit. Dieses erfolgt vorzugsweise durch Trocknung, wobei die Temperatur und der Umgebungsdruck in Abhängigkeit vom Partial-Dampfdruck der Fällungs-Flüssigkeit gewählt wird. Üblicherweise erfolgt die Trocknung bei Normaldruck und Temperaturen zwischen 20°C und 200°C. Eine schonendere Trocknung kann auch im Vakuum erfolgen. Die Trocknungsmethode unterliegt keiner Einschränkung.

Die Behandlung im Fällungsbad kann zur Ausbildung von porösen Strukturen, insbesondere bei Hohlfasern, führen. Je nach Verwendung sind diese für die nachfolgende Verwendung erwünscht.

Die aus den erfindungsgemäßen hergestellten hochmolekularen Polyazollösungen hergestellten Filme weisen, wie bereits vorstehend dargelegt, verbesserte Materialeigenschaften gegenüber den bisher bekannten Polymerfolien auf und eignen sich hervorragend als Ausgangsmaterials für die Herstellung von protonenleitenden Membranen.

Zur Bestimmung der inhärenten Viskosität (IV) wird das Polymer zunächst bei 160°C während 2 Stunden getrocknet. 100 mg des so getrockneten Polymers werden dann während 4 Stunden bei 80°C in 100 ml konzentrierter Schwefelsäure (mindestens 96 Gew.-%) gelöst. Die inhärente Viskosität wird aus dieser Lösung gemäss ISO 3105 mit einem Ubbelhode Viskosimeter bei einer Temperatur von 25°C ermittelt.

### BEISPIELE

### Beispiel 1

214,27 g TAB (Tetraaminobiphenyl) und 166,14 g Isophthalsäure wurden unter N2-Atmosphäre in einem Quarzreaktor vorgelegt, welcher mit einem Rührer ausgestattet war. Anschließend wurde die Mischung unter Rühren für 1 Stunde auf 150°C, für 1 Stunde auf 190°C, für 1 Stunde auf 250°C, und anschließend 1,5 Stunden auf 290°C erhitzt. Zwischen 190°C und 250°C wurde eine starke Schaumbildung beobachtet. Anschließend wurde der gebildete Schaum mittels des vorhandenen Rührers in kleine Partikel zerkleinert. Nach weiteren 1,5 Stunden bei 290°C wurde der Reaktor abgekühlt und das Polymer mit einem Siebmaschine in 5 Fraktionen (<212, 212-300, 300-500, 500-1000 und >1000µm) gesiebt.
Tabelle 1 zeigt die inhärenten Viskositäten (IV) und Anteile der einzelnen Fraktionen. Anschließend wurde jede einzelne Fraktion in einen Quarzreaktor gefüllt und unter N2-Atmosphäre bei 380°C unter Rühren für 3 Stunden polymerisiert, anschließend abgekühlt und die IV des Polymeren gemessen.
Die gefundenen IV-Ergebnisse der jeweiligen Polymersation sind in Tabelle 1 aufgeführt.

**Tabelle 1:**

| Partikelgröße [um] | Prozent [%] | IV vor Fraktionierung | IV nach Endpolymerisation |
|---|---|---|---|
| <212 | 31,16 | 0,23 | 0,56 |
| 212-300 | 16,47 | 0,25 | 1,04 |
| 300-500 | 18,94 | 0,25 | 1,40 |
| 500-1000 | 27,38 | 0,26 | 1,44 |
| >1000 | 6,06 | 0,25 | 1,17 |

## Patentansprüche

1. Verfahren zur Herstellung eines Polymeren auf Basis von Polyazolen dessen Molekulargewicht gemessen als Intrinsische Viskosität, nach vorheriger Trocknung bei 160°C für die Dauer von 2 Stunden und Lösen in min. 96%-iger Schwelfelsäure bei 80°C für die Dauer von 4 Stunden, gemäß ISO 3105 bei einer Temperatur von 25°C, mindestens 1,3 dl/g beträgt umfassend die Schritte:
A) Mischen von einem oder mehreren aromatischen Tetra-Amino-Verbindungen mit einer oder mehreren aromatischen Carbonsäuren bzw. deren Estern, die mindestens zwei Säuregruppen pro Carbonsäure-Monomer enthalten, oder Mischen von einer oder mehreren aromatischen und/oder heteroaromatischen Diaminocarbonsäuren,
B) Erwärmen der Mischung erhältlich gemäß Schritt B) unter Inertgas auf Temperaturen von bis zu 350°C, vorzugsweise bis zu 300°C,
C) Zerkleinern der gemäß Schritt B) erhaltenen Masse und Fraktionierung der erhaltenen Teilchen,
D) Erwärmen der Teilchenfraktion 300µm bis 1000µm unter Inertgas auf Temperaturen von bis zu 450°C, vorzugsweise bis zu 400°C, und abkühlen.

2. Verfahren gemäß Anspruch 1, **dadurch gekennzeichnet, dass** als aromatische Tetra-Amino-Verbindungen 3,3',4,4'-Tetraaminobiphenyl, 2,3,5,6-Tetraaminopyridin, 1,2,4,5-Tetraaminobenzol, 3,3',4,4'-Tetraaminodiphenylsulfon, 3,3',4,4'-Tetraaminodiphenylether, 3,3',4,4'-Tetraaminobenzophenon, 3,3',4,4'-Tetraaminodiphenylmethan und 3,3',4,4'-Tetraaminodiphenyldimethylmethan eingesetzt werden.

3. Verfahren gemäß Anspruch 1, **dadurch gekennzeichnet, dass** als aromatische Di-carbonsäuren Isophthalsäure, Terephthalsäure, Phthalsäure, 5-Hydroxyisophthalsäure, 4-Hydroxyisophthalsäure, 2-Hydroxyterephthalsäure, 5-Aminoisophthalsäure, 5-N,N-Dimethylaminoisophthalsäure, 5-N,N-Diethylaminoisophthalsäure, 2,5-Dihydroxyterephthalsäure, 2,5-Dihydroxyisophthalsäure, 2,3-Dihydroxyisophthalsäure, 2,3-Dihydroxyphthalsäure, 2,4-Dihydroxyphthalsäure. 3,4-Dihydroxyphthalsäure, 3-Fluorophthalsäure, 5-Fluoroisophthalsäure, 2-Fluoroterphthalsäure, Tetrafluorophthalsäure, Tetrafluoroisophthalsäure, Tetrafluoroterephthalsäure, 1,4-Naphthalindicarbonsäure, 1,5-Naphthalindicarbonsäure, 2,6-Naphthalindicarbonsäure, 2,7-Naphthalindicarbonsäure, Diphensäure, 1,8-dihydroxynaphthalin-3,6-dicarbonsäure, Diphenylether-4,4'-dicarbonsäure, Benzophenon-4,4'-dicarbonsäure, Diphenylsul-fon-4,4'-dicarbonsäure, Biphenyl-4,4'-dicarbonsäure, 4-Trifluoromethylphthalsäure, 2,2-Bis(4-carboxyphenyl)hexafluoropropan, 4,4'-Stilbendicarbonsäure, 4-Carboxyzimtsäure, bzw. deren C1-C20-Alkyl-Ester oder C5-C12-Aryl-Ester, oder deren Säureanhydride oder deren Säurechloride eingesetzt werden.

4. Verfahren gemäß Anspruch 1, **dadurch gekennzeichnet, dass** als aromatische Carbonsäure Tri-carbonsäuren, Tetracarbonsäuren bzw. deren C1-C20-Alkyl-Ester oder C5-C12-Aryl-Ester oder deren Säureanhydride oder deren Säurechloride, vorzugsweise 1,3,5-benzene-tricarboxylic acid (trimesic acid); 1,2,4-benzene-tricarboxylic acid (trimellitic acid); (2-Carboxyphenyl)iminodiessigsäure, 3,5,3'-biphenyltricarboxylic acid; 3,5,4'-biphenyltricarboxylic acid und/oder 2,4,6-pyridinetricarboxylic acid eingesetzt werden.

5. Verfahren gemäß Anspruch 1, **dadurch gekennzeichnet, dass** als aromatische Carbonsäure Tetracarbonsäuren deren C1-C20-Alkyl-Ester oder C5-C12-Aryl-Ester oder deren Säureanhydride oder deren Säurechloride, vorzugsweise Benzol 1,2,4,5-tetracarbonsäuren; Naphthalin-1,4,5,8-tetracarbonsäuren 3,5,3',5'-biphenyltetracarboxylic acid; Benzophenontetracarbonsäure, 3,3',4,4'-Biphenyltetracarbonsäure, 2,2',3,3'-Biphenyltetracarbonsäure, 1,2,5,6-Naphthalintetracarbonsäure, 1,4,5,8-Naphthalintetracarbonsäure eingesetzt werden.

6. Verfahren gemäß Anspruch 4, **dadurch gekennzeichnet, dass** der Gehalt an Tricarbonsäure bzw. Tetracarbonsäuren (bezogen auf eingesetzte Dicarbonsäure) zwischen 0 und 30 Mol-%, vorzugsweise 0,1 und 20 Mol %, insbesondere 0,5 und 10 Mol%. beträgt.

7. Verfahren gemäß Anspruch 1, **dadurch gekennzeichnet, dass** als heteroaromatische Carbonsäuren heteroaromatische Di-carbonsäuren und Tri-carbonsäuren und Tetra-Carbonsäuren eingesetzt werden, welche mindestens ein Stickstoff, Sauerstoff, Schwefel oder Phosphoratom im Aromaten enthalten, vorzugsweise Pyridin-2,5-dicarbonsäure, Pyridin-3,5-dicarbonsäure, Pyridin-2,6-dicarbonsäure, Pyridin-2,4-dicarbonsäure, 4-Phenyl-2,5-pyridindicarbonsäure, 3,5-Pyrazoldicarbonsäure, 2,6 -Pyrimidindicarbonsäure,2,5-Pyrazindicarbonsäure, 2,4,6-Pyridintricarbonsäure, Benzimidazol-5,6-dicarbonsäure, sowie deren C1-C20-Alkyl-Ester oder C5-C12-Aryl-Ester, oder deren Säureanhydride oder deren Säurechloride.

8. Verfahren gemäß Anspruch 1, **dadurch gekennzeichnet, dass** es wiederkehrende Azoleinheiten der allgemeinen Formel (I) und/oder (II) und/oder (III) und/oder (IV) und/oder (V) undloder (VI) und/oder (VII) und/oder (VIII) und/oder (IX) und/oder (X) 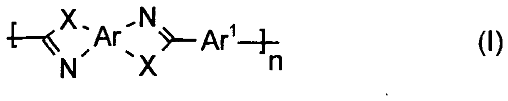 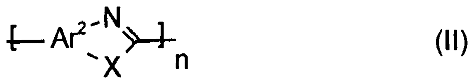 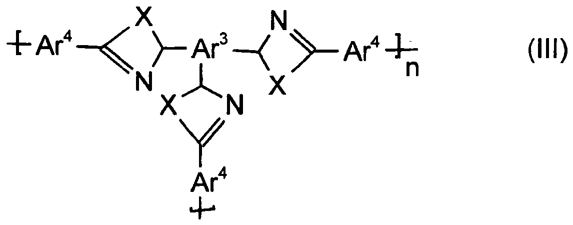 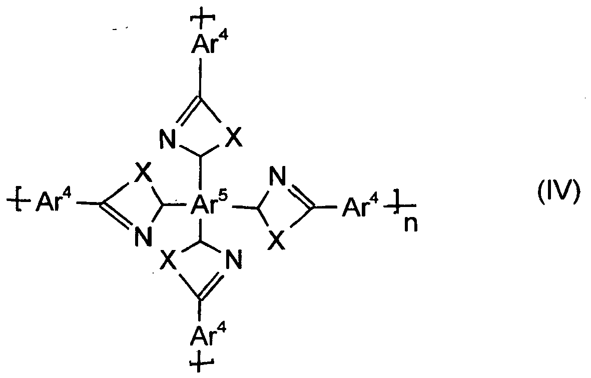 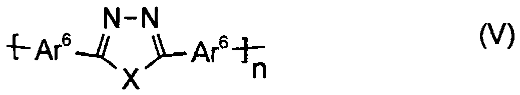 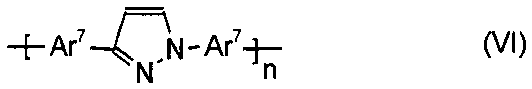 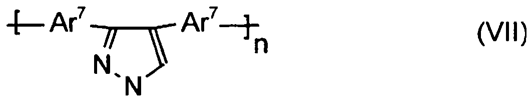 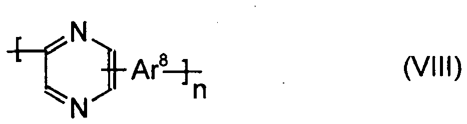 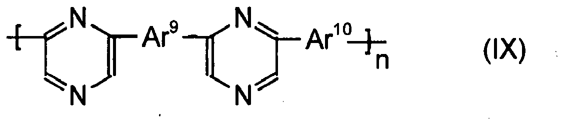 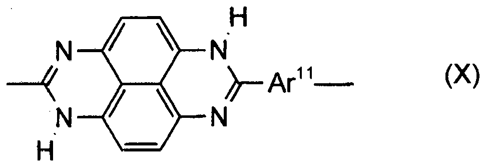 worin
Ar gleich oder verschieden sind und für eine vierbindige aromatische oder heteroaromatische Gruppe, die ein- oder mehrkernig sein kann,
Ar¹ gleich oder verschieden sind und für eine zweibindige aromatische oder heteroaromatische Gruppe, die ein- oder mehrkernig sein kann,
Ar² gleich oder verschieden sind und für eine zwei oder dreibindige aromatische oder heteroaromatische Gruppe, die ein- oder mehrkernig sein kann,
Ar³ gleich oder verschieden sind und für eine dreibindige aromatische oder heteroaromatische Gruppe, die ein- oder mehrkernig sein kann,
Ar⁴ gleich oder verschieden sind und für eine dreibindige aromatische oder heteroaromatische Gruppe, die ein- oder mehrkernig sein kann,
Ar⁵ gleich oder verschieden sind und für eine vierbindige aromatische oder heteroaromatische Gruppe, die ein- oder mehrkernig sein kann,
Ar⁶ gleich oder verschieden sind und für eine zweibindige aromatische oder heteroaromatische Gruppe, die ein- oder mehrkernig sein kann,
Ar⁷ gleich oder verschieden sind und für eine zweibindige aromatische oder heteroaromatische Gruppe, die ein- oder mehrkernig sein kann,
Ar⁸ gleich oder verschieden sind und für eine dreibindige aromatische oder heteroaromatische Gruppe, die ein- oder mehrkernig sein kann,
Ar⁹ gleich oder verschieden sind und für eine zwei- oder drei- oder vierbindige aromatische oder heteroaromatische Gruppe, die ein- oder mehrkernig sein kann,
Ar¹⁰ gleich oder verschieden sind und für eine zwei- oder dreibindige aromatische oder heteroaromatische Gruppe, die ein- oder mehrkernig sein kann,
Ar¹¹ gleich oder verschieden sind und für eine zweibindige aromatische oder heteroaromatische Gruppe, die ein- oder mehrkernig sein kann,
X gleich oder verschieden ist und für Sauerstoff, Schwefel oder eine Aminogruppe, die ein Wasserstoffatom, eine 1- 20 Kohlenstoffatome aufweisende Gruppe, vorzugsweise eine verzweigte oder nicht verzweigte Alkyl- oder Alkoxygruppe, oder eine Arylgruppe als weiteren Rest trägt und
n eine ganze Zahl größer gleich 10, bevorzugt größer gleich 100 ist,
enthält.

9. Verfahren gemäß Anspruch 8, **dadurch gekennzeichnet, dass** es sich um ein Polymer ausgewählt aus der Gruppe Polybenzimidazol, Poly(pyridine), Poly(pyrimidine), Polyimidazole, Polybenzthiazole, Polybenzoxazole, Polyoxadiazole, Polyquinoxalines, Polythiadiazole und Poly(tetrazapyrene) handelt.

10. Verfahren gemäß Anspruch 1, **dadurch gekennzeichnet, dass** es sich um ein Polymer enthaltend wiederkehrende Benzimidazoleinheiten der Formel 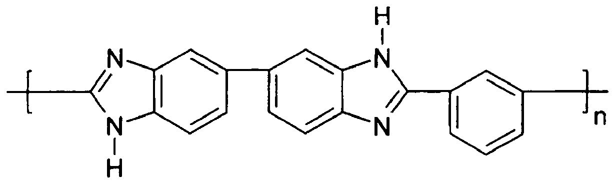 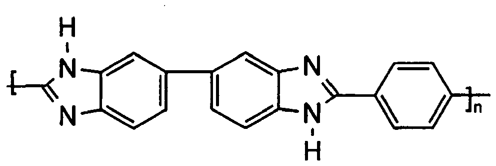 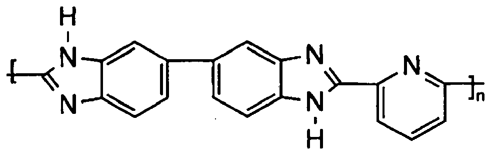 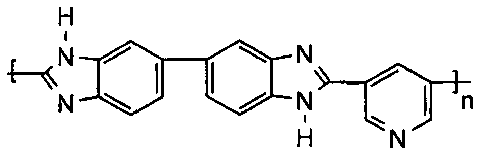 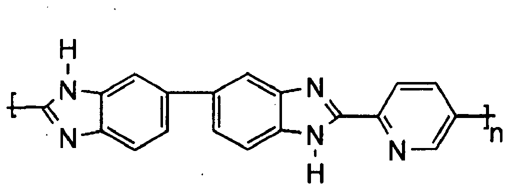 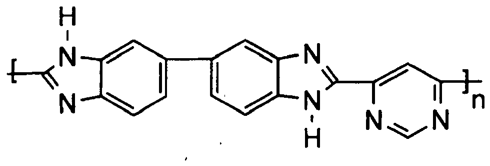 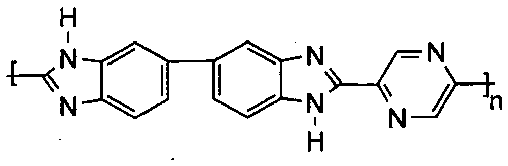 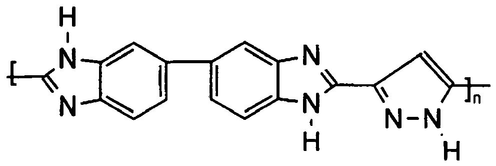 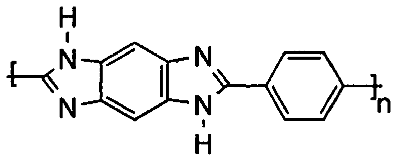 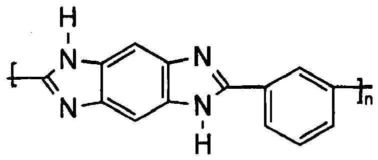 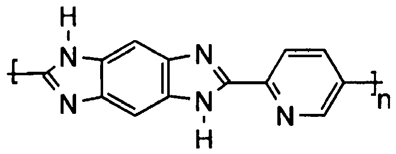 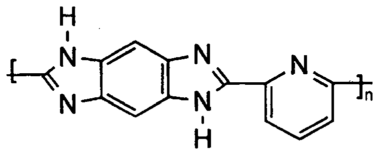 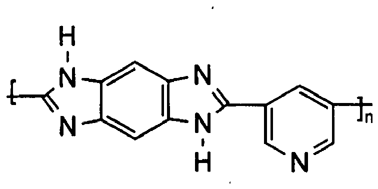 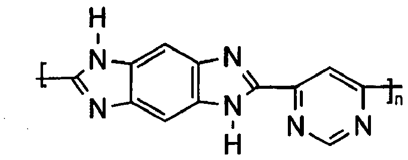 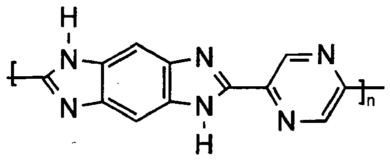 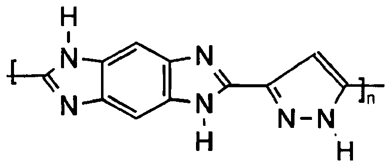 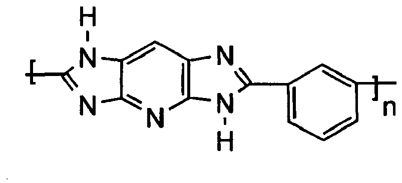 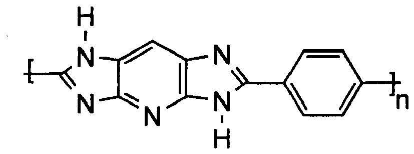 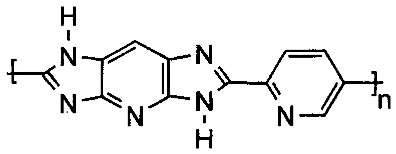 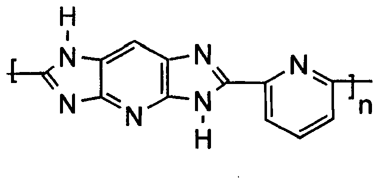 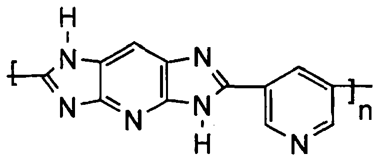 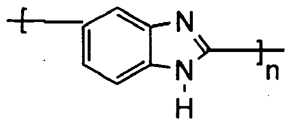 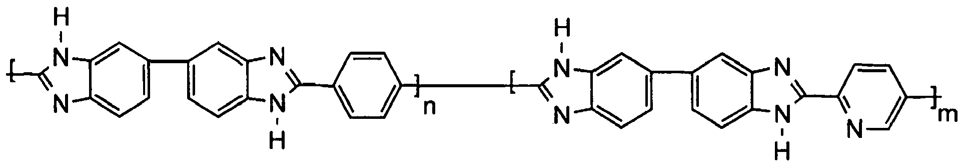 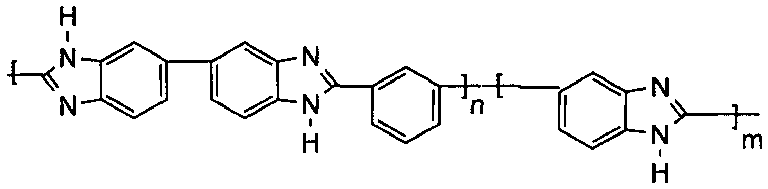 wobei n und m eine ganze Zahl größer gleich 10, vorzugsweise größer gleich 100 ist, handelt.

11. Verfahren gemäß Anspruch 1, **dadurch gekennzeichnet, dass** die in Schritt D) eingesetzte Teilchenfraktion mindestens 90 Gew.-% der Teilchenfraktion 300µm bis 1000µm enthält.

12. Verwendung des Polymeren gemäß Anspruch 1 zur Herstellung von Lösungen des Polymeren in polaren, aprotischen Lösemitteln, Formkörpern, Folien, Fasern und/oder Beschichtungen.

13. Polymerlösungen enthaltend Polymere gemäß Anspruch 1 gelöst in polaren, aprotischen Lösemitteln.

14. Verwendung der Polymerlösung gemäß Anspruch 13, zur Herstellung von Formkörpern, Faser, Folien und/oder Beschichtungen.

15. Formkörper enthaltend ein mindestens ein Polymer gemäß Anspruch 1.

16. Faser enthaltend ein mindestens ein Polymer gemäß Anspruch 1.

17. Folie enthaltend ein mindestens ein Polymer gemäß Anspruch 1.

18. Beschichtung enthaltend ein mindestens ein Polymer gemäß Anspruch 1.

## Claims

1. A method of producing a polyazole-based polymer, the molecular weight whereof, measured as the intrinsic viscosity following previous drying at 160°C for a period of 2 hours and dissolution in min. 96%-sulphuric acid at 80°C for a period of 4 hours, according to ISO 3105 at a temperature of 25°C, is at least 1.3 dl/g, comprising the following steps:
A) mixing of one or a plurality of aromatic tetra-amino compounds with one or a plurality of aromatic carbonic acids or the esters thereof, which contain at least two acid groups per carbonic acid monomer, or mixing of one or a plurality of aromatic and/or heteroaromatic diamino-carbonic acids,
B) heating of the mixture obtainable according to step B) with inert gas at temperatures of up to 350°C, preferably up to 300°C,
C) comminution of the compound obtained according to step B) and fractionation of the particles obtained,
D) heating of the particle fraction 300 µm to 1000 µm with inert gas to temperatures of up to 450°C, preferably up to 400°C, and cooling down.

2. The method according to claim 1, **characterized in that** 3,3',4,4'-tetra-aminobiphenyl, 2,3,5,6-tetra-aminopyridine, 1,2,4,5-tetra-aminobenzene, 3,3',4,4'-tetra-aminodiphenylsulfone, 3,3',4,4'-tetra-aminodiphenylether, 3,3',4,4'-tetra-aminobenzophenone, 3,3',4,4'-tetra-aminodiphenylmethane and 3,3',4,4'-tetra-aminodiphenyldimethylmethane are used as aromatic tetra-amino compounds.

3. The method according to claim 1, **characterized in that** isophthalic acid, terephthalic acid, phthalic acid, 5-hydroxyisophthalic acid, 4-hydroxyisophthalic acid, 2-hydroxyterephthalic acid, 5-aminoisophthalic acid, 5-N,N-dimethylaminoisophthalic acid, 5-N,N-diethylaminoisophthalic acid, 2,5-dihydroxyterephthalic acid, 2,5-dihydroxyisophthalic acid, 2,3-dihydroxyisophthalic acid, 2,3-dihydroxyphthalic acid, 2,4-dihydroxyphthalic acid, 3,4-dihydroxyphthalic acid, 3-fluorophthalic acid, 5-fluoroisophthalic acid, 2-fluoroterphthalic acid, tetrafluorophthalic acid, tetrafluoroisophthalic acid, tetrafluoroterephthalic acid, 1,4-naphthalenecarbonic acid, 1,5-naphthalenedicarbonic acid, 2,6-naphthalenedicarbonic acid, 2,7-naphthalenedicarbonic acid, diphenolic acid, 1,8-dihydroxynaphthalene-3,6-dicarbonic acid, diphenylether-4,4'-dicarbonic acid, benzophenone-4,4'-dicarbonic acid, diphenylsulfone-4,4'-dicarbonic acid, biphenyl-4,4'-dicarbonic acid, 4-trifluoromethylphthalic acid, 2,2-bis(4-carboxyphenyl)hexafluoropropane, 4,4'-stilbene dicarbonic acid, 4-carboxy cinnamic acid or C1-C20-alkyl-esters thereof or C5-C12-aryl-ester or acid anhydrides thereof or acid chlorides thereof are used as aromatic dicarbonic acids.

4. The method according to claim 1, **characterized in that** tri-carbonic acids, tetracarbonic acids or C1-C20-alkyl-esters or C5-C12-aryl-esters thereof or acid anhydrides thereof or acid chlorides thereof, preferably 1,3,5-benzene-tricarboxylic acid (trimesic acid); 1,2,4-benzene-tricarboxylic acid (trimellitic acid); (2-carboxyphenyl)iminodiacetic acid, 3,5,3'-biphenyltricarboxylic acid; 3,5,4'-biphenyltricarboxylic acid and/or 2,4,6-pyridinetricarboxylic acid are used as aromatic carbonic acid.

5. The method according to claim 1, **characterized in that** tetracarbonic acids, C1-C20-alkyl-esters or C5-C12-aryl-esters thereof or acid anhydrides thereof or acid chlorides thereof, preferably benzene 1,2,4,5-tetracarbonic acids; naphthalene-1,4,5,8-tetracarbonic acids 3,5,3',5'-biphenyltetracarboxylic acid; benzophenonetetracarbonic acid, 3,3',4,4'-biphenyltetracarbonic acid, 2,2',3,3'-biphenyltetracarbonic acid, 1,2,5,6-naphthalenetetracarbonic acid, 1,4,5,8-naphthalenetetracarbonic acid are used as aromatic carbonic acid.

6. The method according to claim 4, **characterized in that** the content of tricarbonic acid or tetracarbonic acids (relative to the dicarbonic acid used) is between 0 and 30 mol %, preferably 0.1 and 20 mol %, in particular 0.5 and 10 mol %.

7. The method according to claim 1, **characterized in that** heteroaromatic di-carbonic acids and tri-carbonic acids and tetra-carbonic acids which contain at least one nitrogen, oxygen, sulphur or phosphor atom in the aromatic, preferably pyridine-2,5-dicarbonic acid, pyridine-3,5-dicarbonic acid, pyridine-2,6-dicarbonic acid, pyridine-2,4-dicarbonic acid, 4-phenyl-2,5-pyridinedicarbonic acid, 3,5-pyrazoledicarbonic acid, 2,6-pyrimidinedicarbonic acid,2,5-pyrazinedicarbonic acid, 2,4,6-pyridinetricarbonic acid, benzimidazole-5,6-dicarbonic acid, as well as C1-C20-alkyl-esters or C5-C12-aryl-esters thereof, or acid anhydrides or acid chlorides thereof, are used as heteroaromatic carbonic acids.

8. The method according to claim 1, **characterized in that** it contains repeating azole units with the general formula (I) and/or (II) and/or (III) and/or (IV) and/or (V) and/or (VI) and/or (VII) and/or (VIII) and/or (IX) and/or (X) 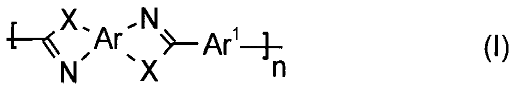 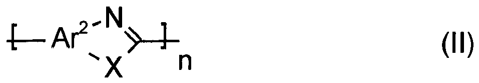 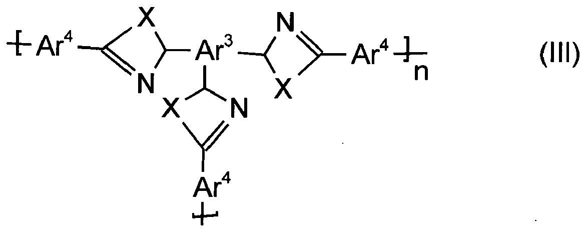 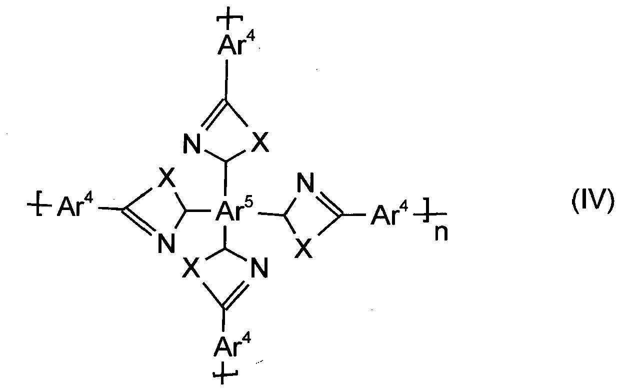 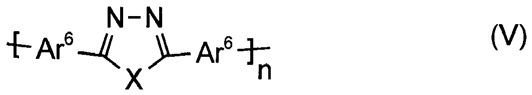 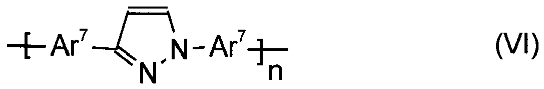 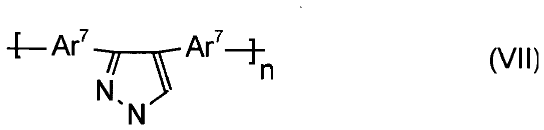 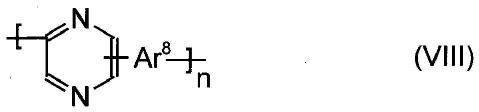 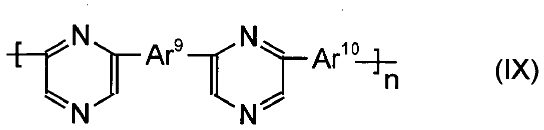 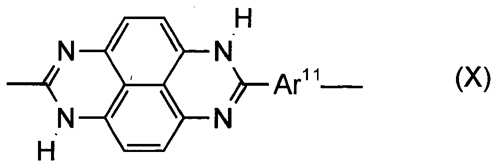 wherein
Ar are the same or different and for a tetravalent aromatic or heteroaromatic group which may be mono- or multi-nuclear,
Ar¹ are the same or different and for a bivalent aromatic or heteroaromatic group which may be mono- or multi-nuclear,
Ar² are the same or different and for a bivalent or trivalent aromatic or heteroaromatic group which may be mono- or multi-nuclear,
Ar³ are the same or different and for a trivalent aromatic or heteroaromatic group which may be mono- or multi-nuclear,
Ar⁴ are the same or different and for a trivalent aromatic or heteroaromatic group which may be mono- or multi-nuclear,
Ar⁵ are the same or different and for a tetravalent aromatic or heteroaromatic group which may be mono- or multi-nuclear,
Ar⁶ are the same or different and for a bivalent aromatic or heteroaromatic group which may be mono- or multi-nuclear,
Ar⁷ are the same or different and for a bivalent aromatic or heteroaromatic group which may be mono- or multi-nuclear,
Ar⁸ are the same or different and for a trivalent aromatic or heteroaromatic group which may be mono- or multi-nuclear,
Ar⁹ are the same or different and for a bivalent or trivalent or tetravalent aromatic or heteroaromatic group which may be mono- or multi-nuclear,
Ar¹⁰ are the same or different and for a bivalent or trivalent aromatic or heteroaromatic group which may be mono- or multi-nuclear,
Ar¹¹ are the same or different and for a bivalent aromatic or heteroaromatic group which may be mono- or multi-nuclear,
X is the same or different and for oxygen, sulphur or an amino group which carries a hydrogen atom, a group containing 1-20 carbon atoms, preferably a branched or unbranched alkyl or alkyl group or an aryl group as the further residue and
n is a whole number greater than or equal to 10, preferably greater than or equal to 100.

9. The method according to claim 8, **characterized in that** it is a polymer chosen from the group of polybenzimidazole, poly(pyridine), poly(pyrimidine), polyimidazole, polybenzthiazole, polybenzoxazole, polyoxadiazole, polyquinoxalines, polythiadiazole and poly(tetrazapyrene).

10. The method according to claim 1, **characterized in that** it involves polymer-containing, recurring benzimidazole units with the formula 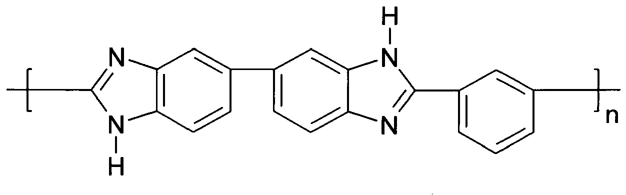 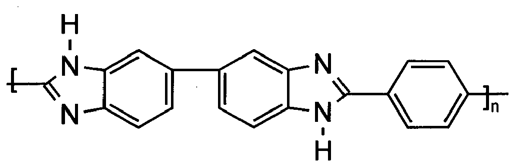 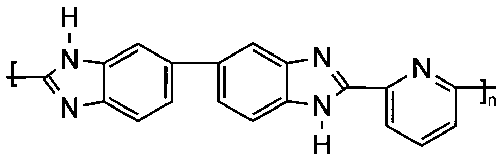 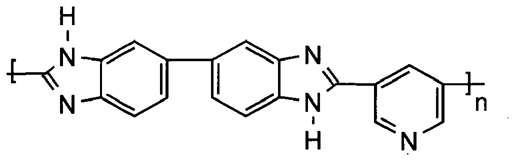 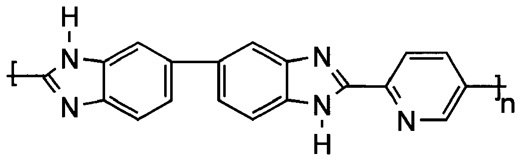 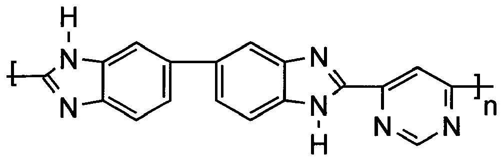 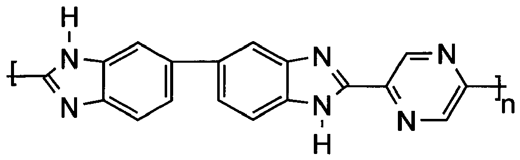 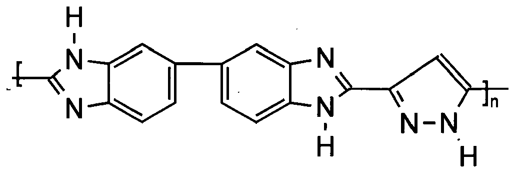 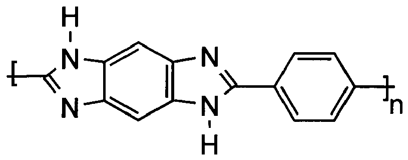 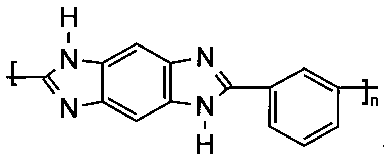 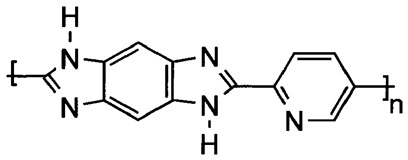 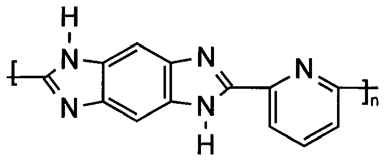 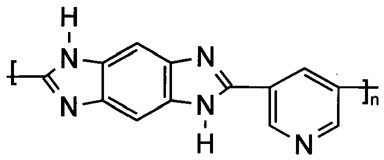 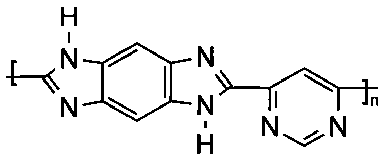 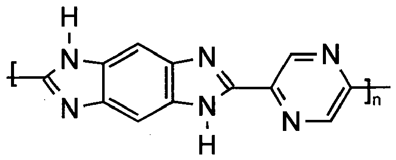 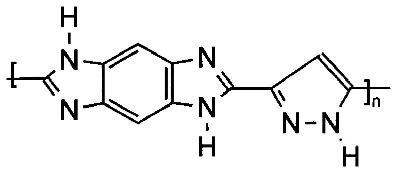 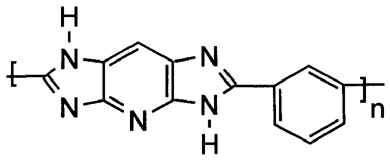 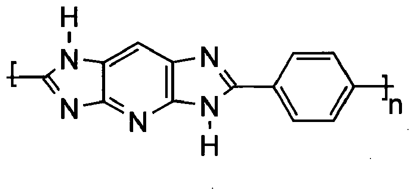 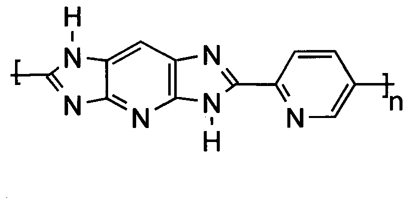 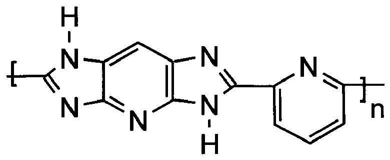 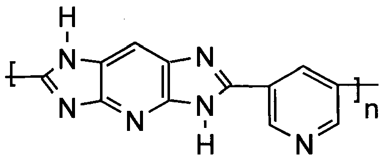 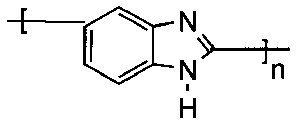 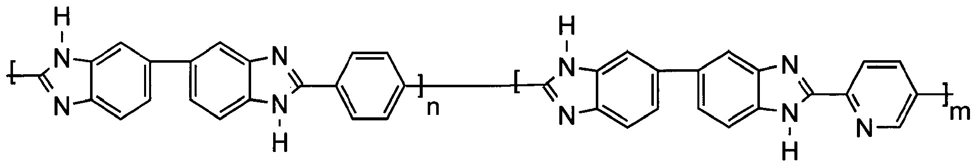 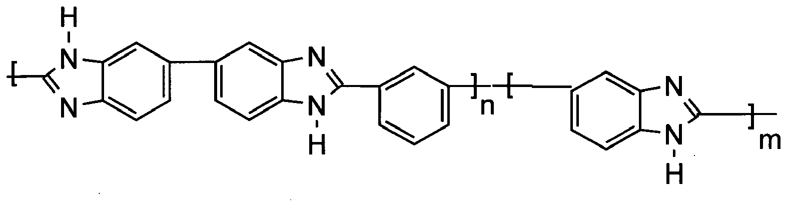 wherein n and m are a whole number greater than or equal to 10, preferably greater than or equal to 100.

11. The method according to claim 1, **characterized in that** the partial fraction used in step D) contains at least 90 % by wt. of the particle fraction 300 µm to 1000 µm.

12. A use of the polymer according to claim 1 for producing solutions of the polymer in polar, aprotic solvents, moulds, films, fibres and/or coatings.

13. Polymer solutions containing polymers according to claim 1 dissolved in polar, aprotic solvents.

14. A use of the polymer solution according to claim 13 for producing moulds, fibres, films and/or coatings.

15. A mould containing at least one polymer according to claim 1.

16. A fibre containing at least one polymer according to claim 1.

17. A film containing at least one polymer according to claim 1.

18. A coating containing at least one polymer according to claim 1.

## Revendications

1. Procédé de fabrication d'une membrane polymère à base de polyazoles dont le poids moléculaire mesuré en tant que viscosité intrinsèque, après un séchage d'une durée de 2 heures à 160 °C, puis une dissolution dans une solution composée à au moins 96 % d'acide sulfurique à 80 °C pendant au moins 4 heures, s'élève d'après d'ISO 3105 à 1,3 dl/g à une température de 25 °C, comprenant les étapes :
A) Mélange d'un ou plusieurs composés tétraamino aromatiques avec un ou plusieurs acides carboxyliques, ou leurs esters, qui contiennent au moins deux groupes d'acide par monomère d'acide carboxylique, ou mélange d'un ou plusieurs acides diaminocarboxyliques aromatiques ou hétéroaromatiques,
B) Réchauffement du mélange obtenu à l'étape B) sous gaz inerte à des températures pouvant atteindre 350 °C, idéalement 300 °C,
C) Concassage de la masse obtenue à l'étape B) et fractionnement des particules obtenues,
D) Réchauffement de la fraction de particule 300 µm à 1000 µm sous gaz inerte à des températures pouvant atteindre 450 °C, idéalement 400 °C, suivi d'un refroidissement.

2. Procédé selon la revendication 1, **caractérisé en ce que** les composés de tétramine aromatiques utilisés sont 3,3',4,4'-tétraaminobiphényle, 2,3,5,6-tétraaminopyridine, 1,2,4,5, tétraaminobenzole, 3,3',4,4'-tétraaminodiphéhyle sulfone, 3,3',4,4' tétraaminodiphényléther, 3,3',4,4,'-tétraaminobenzophénone, 3,3',4,4'-méthane tétraaminodiphényle et 3,3',4,4'-méthane tétraaminodiphényldiméthyle.

3. Procédé selon la revendication 1, **caractérisé en ce que** les acides dicarboxyliques utilisés sont l'acide isophtalique, acide téréphtalique, acide phtalique, acide 5-hydroxyisophthalique, acide 4-hydroxyisophthalique, acide 2-hydroxyterephthalique, acide 5-aminoisophthalique, 5-N acide N-diméthylaminoisophthalique, 5-N, acide N-diéthylaminoisophthalique, acide 2,5-dihydroxyterephthalique, acide 2,5 dihydroxyisophthalique, acide 2,3-dihydroxyisophthalique, acide 2,3-dihydroxyphthalique, acide 2,4-dihydroxyphthalique, acide 3,4-dihydroxyphthalique, acide 3-fluorophthalique, acide 5-fluoroisophthalique, acide 2-fluoroterephthalique, acide tétrafluorophthalique, acide tétrafluoroisophthalique, acide tétrafluoroterephthalique, acide 1,4-naphthalènedicarboxylique, acide 1,5-naphthalènedicarboxylique, acide 2,6 naphthalènedicarboxylique, acide 2,7-naphthalènedicarboxylique, acide diphénique, acide 1,8-dihydroxynaphthalène-3,6-dicarboxylique, éther diphényliqueacide 4,4' dicarboxylique, benzophénone-acide 4,4' dicarboxylique, sulfone de diphényle-acide 4,4'-dicarboxylique, biphényle-4,4' acide dicarboxylique, acide 4-trifluorométhylphthalique, 2,2-bis (4-carboxyphényle) hexafluoropropane, acide 4,4' stilbène dicarboxylique, acide 4-carboxycinnamique ou leur ester alkyle C1-C20 ou ester aryle C5-C12 ou leur anhydride d'acide ou leur chlorure d'acide.

4. Procédé selon la revendication 1, **caractérisé en ce qu'**en tant qu'acides carboxyliques aromatiques, on utilise des acides tricarboxyliques, acides tétracarboxyliques ou leur ester alkyle C1-C20 ou ester aryle C5-C12 ou leur anhydride d'acide ou leur chlorure d'acide, de préférence acide 1,3,5-benzène tricarboxylique (acide trimésique) ; acide 1,2,4 benzène tricarboxylique (acide trimellitique) ; acide iminodiacétique (2-carboxyphényle), acide 3,5,3'-biphényltricarboxylique, acide 3,5,4'-biphényltricarboxylique et/ou acide 2,4,6-pyridinetricarboxylique.

5. Procédé selon la revendication 1, **caractérisé en ce qu'**en tant qu'acide carboxyliques aromatiques, on utilise des acides tétracarboxyliques leur ester alkyle C1-C20 ou ester aryle C5-C12 ou leur anhydride d'acide ou leur chlorure d'acide, de préférence acides de benzène 1,2,4,5 tétracarboxylique ; acide naphthalène-1,4,5,8 tétracarboxylique, acide 3,5,3',5' biphényltétra-carboxylique ; acide de benzophénone tétracarboxylique, acide 3,3',4,4'-biphényltétracarboxylique, acide 2,2',3,3'-biphényltétracarboxylique, acide 1,2,5,6 naphtalène tétracarboxylique, acide 1,4,5,8 naphtalène tétracarboxylique.

6. Procédé selon la revendication 4, **caractérisé en ce que** la teneur en acide tricarboxylique ou acides tétracarboxyliques (par rapport à l'acide dicarboxylique utilisé) est comprise entre 0 et 30 % de mol, de préférence 0,1 et 20 % de mol, notamment 0,5 et 10 % de mol.

7. Procédé selon revendication 1, **caractérisé en ce que**, en tant qu'acides carboxyliques hétéroaromatiques, on utilise des acides hétéroaromatiques dicarboxyliques et tricarboxyliques et tétracarboxyliques qui contiennent au moins un atome d'azote, un atome d'oxygène, un atome de soufre ou un atome de phosphore dans l'aromate, de préférence acide pyridine dicarboxylique -2,5, acide pyridine dicarboxylique-3,5, acide pyridine dicarboxylique-2,6, acide pyrdine dicarboxylique-2,4, acide phénylique 4-acide pyridine dicarboxylique 2,5, acide 3,5-pyrazole dicarboxylique, acide 2,6 - pyrimidine dicarboxylique, acide 2,5-pyrazine dicarboxylique, acide 2,4,6-pyridine tricarboxylique, acide benzimidazole 5,6 dicarboxylique et leur ester alkyle C1-C20 ou ester aryle C5-C12, ou leur anhydride d'acide ou leur chlorure d'acide.

8. Procédé selon la revendication 1, **caractérisé en ce que** le polymère à base de polyazoles présente des unités d'azole récurrentes de la formule générale (I) et/ou (II) et/ou (111) et/ou (IV) et/ou (V) et/ou (VI) et/ou (VII) et/ou (VIII) et/ou (IX) et/ou (X) 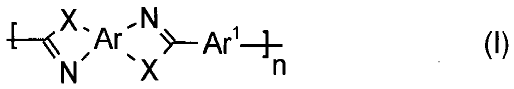 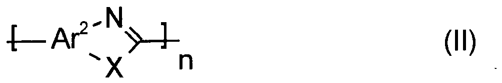 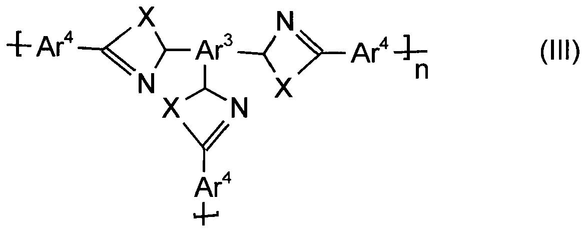 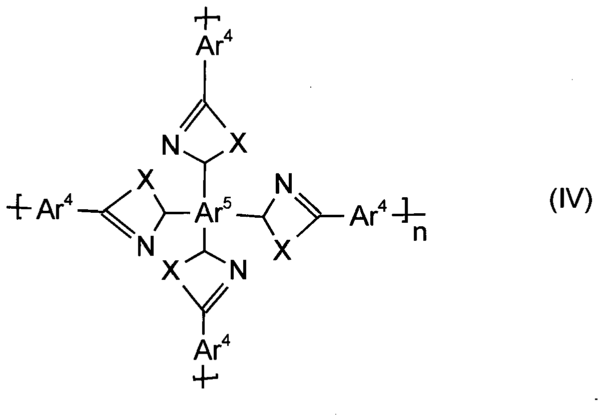 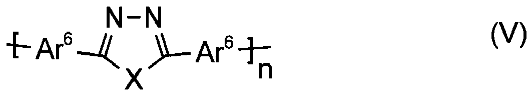 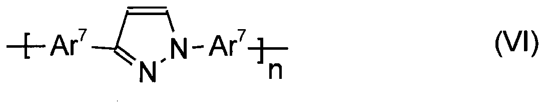 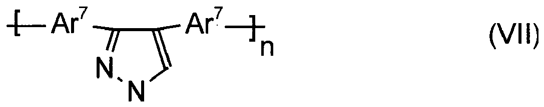 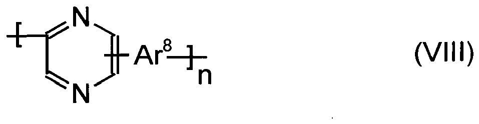 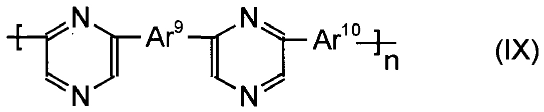 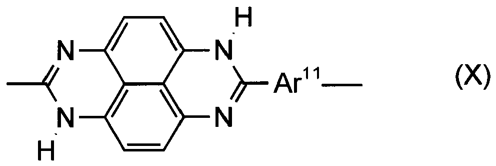 où
Ar sont identiques ou différents et pour un groupe aromatique ou hétéroaromatique à quatre liaisons, qui peut être à un ou plusieurs noyaux,
Ar¹ sont identiques ou différents et pour un groupe aromatique ou hétéroaromatique à deux liaisons, qui peut être à un ou plusieurs noyaux,
Ar² sont identiques ou différents et pour un groupe aromatique ou hétéroaromatique à deux ou trois liaisons, qui peut être à un ou plusieurs noyaux,
Ar³ sont identiques ou différents et pour un groupe aromatique ou hétéroaromatique à trois liaisons, qui peut être à un ou plusieurs noyaux,
Ar⁴ sont identiques ou différents et pour un groupe aromatique ou hétéroaromatique à trois liaisons, qui peut être à un ou plusieurs noyaux,
Ar⁵ sont identiques ou différents et pour un groupe aromatique ou hétéroaromatique à quatre liaisons, qui peut être à un ou plusieurs noyaux,
Ar⁶ sont identiques ou différents et pour un groupe aromatique ou hétéroaromatique à deux liaisons, qui peut être à un ou plusieurs noyaux,
Ar⁷ sont identiques ou différents et pour un groupe aromatique ou hétéroaromatique à deux liaisons, qui peut être à un ou plusieurs noyaux,
Ar⁸ sont identiques ou différents et pour un groupe aromatique ou hétéroaromatique à trois liaisons, qui peut être à un ou plusieurs noyaux,
Ar⁹ sont identiques ou différents et pour un groupe aromatique ou hétéroaromatique à deux, trois ou quatre liaisons, qui peut être à un ou plusieurs noyaux,
Ar¹⁰ sont identiques ou différents et pour un groupe aromatique ou hétéroaromatique à deux ou trois liaisons, qui peut être à un ou plusieurs noyaux,
Ar¹¹ sont identiques ou différents et pour un groupe aromatique ou hétéroaromatique à deux liaisons, qui peut être à un ou plusieurs noyaux,
X est identique ou différent et pour l'oxygène, le souffre ou un groupe amino qui porte en résidu supplémentaire un atome d'hydrogène, un groupe présentant des atomes 1-20 de carbone, de préférence un groupe alkyle ou alkoxyle ou un groupe aryle ramifié ou non ramifié et
n est un nombre entier supérieur ou égal à 10, de préférence supérieur ou égal à 100.

9. Procédé selon la revendication, **caractérisé en ce qu'**il s'agit d'un polymère sélectionné parmi le groupe polybenzimidazole, poly(pyridine), poly(pyrimidine), polyimidazoles, polybenzthiazoles, polybenzoxazoles, polyoxadiazoles, polyquinoxalines, polythiadiazoles et poly(tétrazapyrène).

10. Procédé selon la revendication 1, **caractérisé en ce qu'**il s'agit d'un polymère contenant des unités de benzimidazole récurrentes de la formule 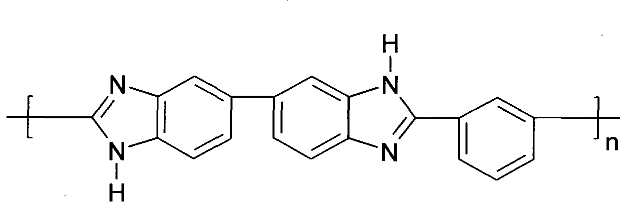 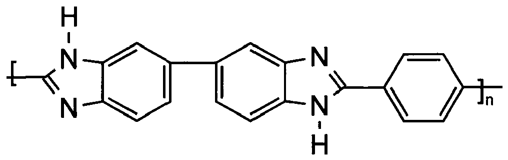 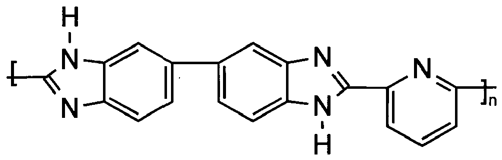 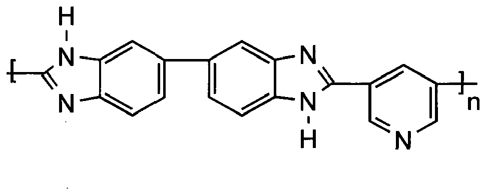 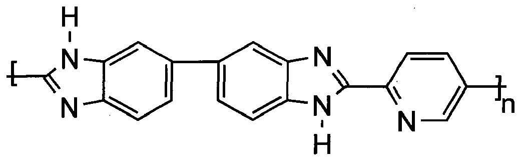 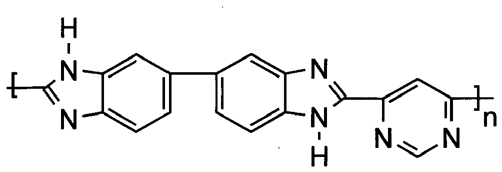 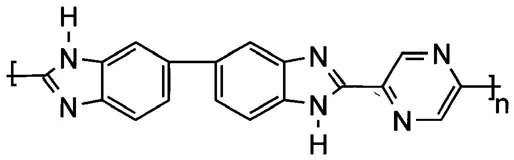 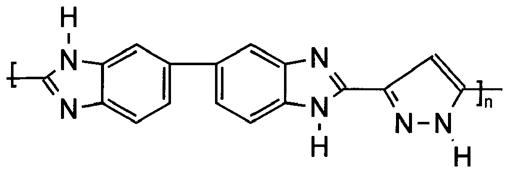 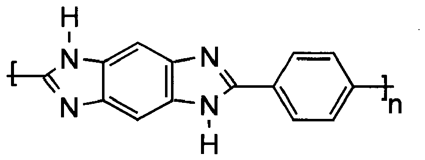 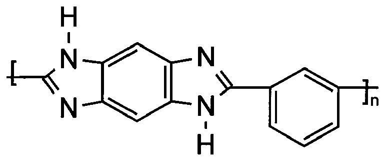 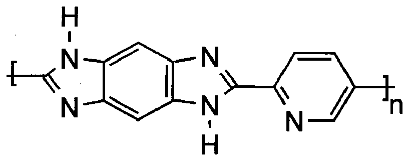 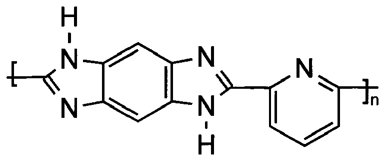 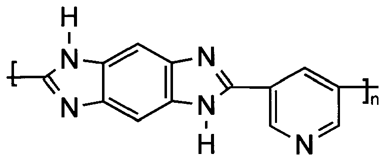 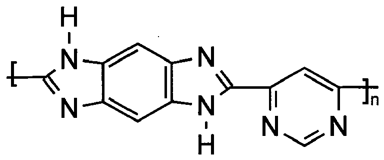 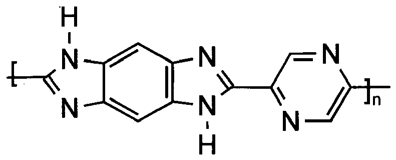 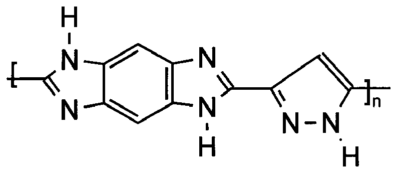 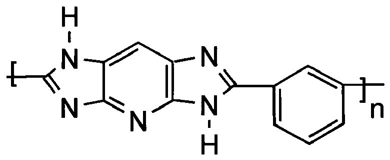 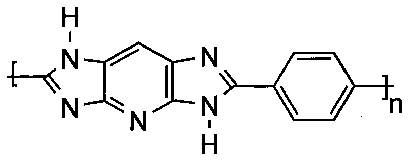 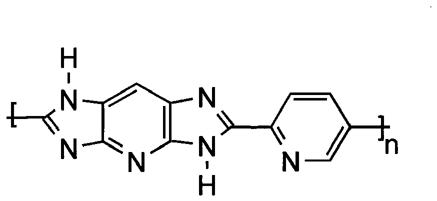 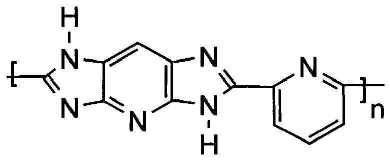 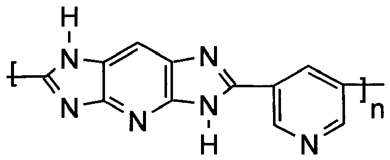 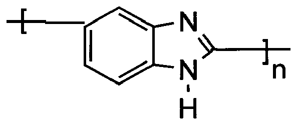 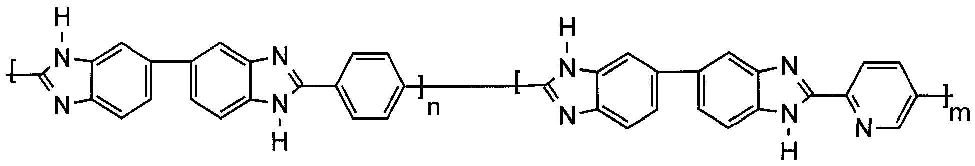 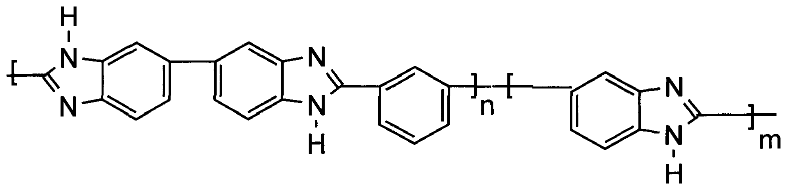 ou n et m est un nombre entier supérieur ou égal à 10, de préférence supérieur ou égal à 100.

11. Procédé selon la revendication 1, **caractérisé en ce que** la fraction de particule utilisée à l'étape D) contient 90 % en poids de la fraction de particule 300 µm à 1000 µm.

12. Utilisation du polymère selon la revendication 1 pour la fabrication de solutions du polymère dans des solvants polaires, aprotiques, corps moulés, films, fibres ou autres revêtements.

13. Solutions de polymère contenant des polymères selon la revendication 1 dissous dans des solvants polaires aprotiques.

14. Utilisation de la solution de polymères selon la revendication 13 pour la fabrication de corps moulés, de fibres, de films ou d'autres revêtements.

15. Corps moulé contenant au moins un polymère selon la revendication 1.

16. Fibre contenant au moins un polymère selon la revendication 1.

17. Film contenant au moins un polymère selon la revendication 1.

18. Revêtement contenant au moins un polymère selon la revendication 1.
